# EUROPÄISCHE PATENTSCHRIFT

(11) **EP 1 651 835 B1**
(45) Veröffentlichungstag und Bekanntmachung des Hinweises auf die Patenterteilung: **02.01.2008**
(21) Anmeldenummer: 04738495.3
(22) Anmeldetag: 10.05.2004
(51) Int. Cl.: E05F 15/16, H02K 5/26

(54) **GETRIEBE-ANTRIEBSEINHEIT**
GEARBOX DRIVE UNIT
UNITE DE TRANSMISSION ET D'ENTRAINEMENT

(30) Priorität: 31.07.2003 DE 10335014
(43) Veröffentlichungstag der Anmeldung: 03.05.2006
(73) Patentinhaber: ROBERT BOSCH GMBH, 70442 Stuttgart (DE)
(72) Erfinder: LAMPERT, Rico, 77880 Sasbach (DE); HAUSSECKER, Walter, 77830 Buehlertal (DE); KURZMANN, Rainer, 77855 Achern (DE); GOEDECKE, Martin, 77815 Buehl (DE); FROEHLICH, Peter, 76133 Karlsruhe (DE); BUEYUEKASIK, Diyap, 77815 Buehl (DE)
(86) Internationale Anmeldenummer: PCT/DE2004/000967
(87) Internationale Veröffentlichungsnummer: WO 2005/014963

(56) Entgegenhaltungen:
- DE-A- 4 319 705
- DE-A- 10 019 512
- FR-A- 2 793 300
- US-A- 4 019 704
- US-A- 4 076 197
- US-A- 5 111 715
- US-A- 6 158 709

## Beschreibung

### Stand der Technik

Die Erfindung geht aus von einer Getriebe-Antriebseinheit nach der Gattung des Hauptanspruchs.

Aus der DE 100 19 512 A1 ist eine Getriebe-Antriebseinheit nach der Gattung des Hauptanspruchs bekannt.

Die aus dieser Druckschrift bekannte Getriebe-Antriebseinheit weist ein Gehäuseteil auf, an dem mehrere Befestigungsdome vorgesehen sind. Die bekannte Getriebe-Antriebseinheit weist außerdem einen Antrieb auf, der als elektromotorischer Antrieb ausgebildet ist und insbesondere für Fensterheber- oder Schiebedachmotoren in einem Kraftfahrzeug geeignet ist. Das Gehäuseteil ist dabei modular aufgebaut, d.h. verschiedene Getriebe- und Elektronikgehäuse können mit einem Poltopf der Getriebe-Antriebseinheit zu verschiedenen Motorgehäusen zusammengefügt werden. Die Befestigung des Gehäuseteils der Getriebe-Antriebseinheit erfolgt beispielsweise durch Anschrauben des Gehäuseteils an den Befestigungsdomen an einem Karosserieteil oder einer Sitzkonstruktion. Dadurch wird die räumliche Anordnung der Getriebe-Antriebseinheit festgelegt. Die bekannte Getriebe-Antriebseinheit hat den Nachteil, dass für ein geändertes Anschraubbild, bei dem die Befestigungsstellen geändert sind, eine Neukonstruktion des Gehäuseteils der Getriebe-Antriebseinheit erforderlich ist. Insbesondere eignet sich die modular zusammengesetzte Getriebe-Antriebseinheit im Allgemeinen nur für eine bestimmte Anwendung.

### Vorteile der Erfindung

Die erfindungsgemäße Getriebe-Antriebseinheit mit den Merkmalen des Hauptanspruchs hat demgegenüber den Vorteil, dass ohne Änderung des Gehäuseteils der Getriebe-Antriebseinheit eine Befestigung in Bezug auf zumindest zwei verschiedene Anschraubbilder erfolgen kann. Somit kann die erfindungsgemäße Getriebe-Antriebseinheit bei veränderten Bedingungen für den gleichen Zweck eingesetzt werden, z.B. als Fensterhebermotor in verschiedenen Kraftfahrzeugen, bei denen die Befestigung unterschiedlich erfolgen muss. Außerdem kann die Getriebe-Antriebseinheit für verschiedene Zwecke eingesetzt werden, z.B. als Fensterheber- oder Schiebedach-Getriebe-Antriebseinheit, selbst wenn für diese beiden Anwendungen unterschiedliche Befestigungen erforderlich sind, d.h. unterschiedliche Anschraubbilder bestehen.

Durch die in den Unteransprüche aufgeführten Maßnahmen sind vorteilhafte Weiterbildungen der im Hauptanspruch angegebenen Getriebe-Antriebseinheit möglich.

Vorteilhaft ist es, dass der Befestigungsdom mittels einer Schwalbenschwanzverbindung mit dem Gehäuseteil der Getriebe-Antriebseinheit verbunden ist. Dadurch kann innerhalb eines gewissen Rahmens eine kontinuierliche Verschiebung des Befestigungsdoms relativ zu dem Gehäuseteil der Getriebe-Antriebseinheit erfolgen, so dass eine Vielzahl von Befestigungsmöglichkeiten besteht.

In vorteilhafter Weise ist der Befestigungsdom mittels einer Schweißverbindung mit dem Gehäuseteil der Getriebe-Antriebseinheit verbunden. Dadurch ist eine konstruktiv einfache Befestigung des Befestigungsdoms an dem Gehäuseteil gegeben, die eine hohe mechanische Festigkeit aufweist. Alternativ zu der Schweißverbindung kann die Befestigung des Befestigungsdomes mit dem Gehäuseteil auch durch eine Schraubverbindung erfolgen.

Vorteilhaft ist es, dass zumindest ein weiterer Befestigungsdom vorgesehen ist und dass der Befestigungsdom und der weitere Befestigungsdom einen gemeinsamen Grundkörper aufweisen, so dass diese gemeinsam mit dem Gehäuseteil verbunden sind. Dadurch kann die Herstellung der Getriebe-Antriebseinheit wesentlich vereinfacht werden, da die miteinander verbundenen Befestigungsdome zusammen bezüglich des Gehäuseteils positioniert und befestigt werden können.

Besonders vorteilhaft ist es, dass das Gehäuseteil zumindest abschnittsweise einen kreisringförmigen Abschnitt aufweist, dass der gemeinsame Grundkörper des Befestigungsdomes und des weiteren Befestigungsdomes den kreisringförmigen Abschnitt teilweise umschließt und an der ersten und der zweiten Verbindungsstelle mit dem kreisringförmigen Abschnitt verbindbar ist. Dadurch kann die Herstellung der Getriebe-Antriebseinheit in Bezug auf ein vorgegebenes Anschraubbild weiter vereinfacht werden, denn bei vorgegebener Anordnung der Befestigungsdome hinsichtlich des Grundkörpers besteht nur noch ein Freiheitsgrad, nämlich die Drehung des Grundkörpers relativ zu dem Gehäuseteil. In Bezug auf verschiedene Anschraubbilder kann eine Anpassung dann entweder durch drehversetztes Anbringen des gemeinsamen Grundkörpers der Befestigungsdome an dem Gehäuseteil oder durch die Herstellung von verschiedenen Grundkörpern, die eine unterschiedliche Anordnung der Befestigungsdome und/oder eine unterschiedliche Anzahl an Befestigungsdomen vorsehen, zum Befestigen an dem Gehäuseteil in Abhängigkeit von dem gegebenen Anschraubbild erfolgen.

### Zeichnung

Ausführungsbeispiele der Erfindung sind in den Zeichnungen vereinfacht dargestellt und in der nachfolgenden Beschreibung näher erläutert. Es zeigen:
- Fig. 1: ein erstes Ausführungsbeispiel der erfindungsgemäßen Getriebe-Antriebseinheit;
- Fig. 2: einen auszugsweisen Schnitt entlang der in Fig. 1 mit II bezeichneten Schnittlinie;
- Fig. 3: den in Fig. 2 dargestellten auszugsweisen Schnitt gemäß einem zweiten Ausführungsbeispiel;
- Fig. 4: den in Fig. 2 dargestellten auszugsweisen Schnitt gemäß einem dritten Ausführungsbeispiel und
- Fig. 5: einen gemeinsamen Grundkörper mit mehreren Befestigungsdomen gemäß einem vierten Ausführungsbeispiel der Getriebe-Antriebseinheit.

### Beschreibung der Ausführungsbeispiele

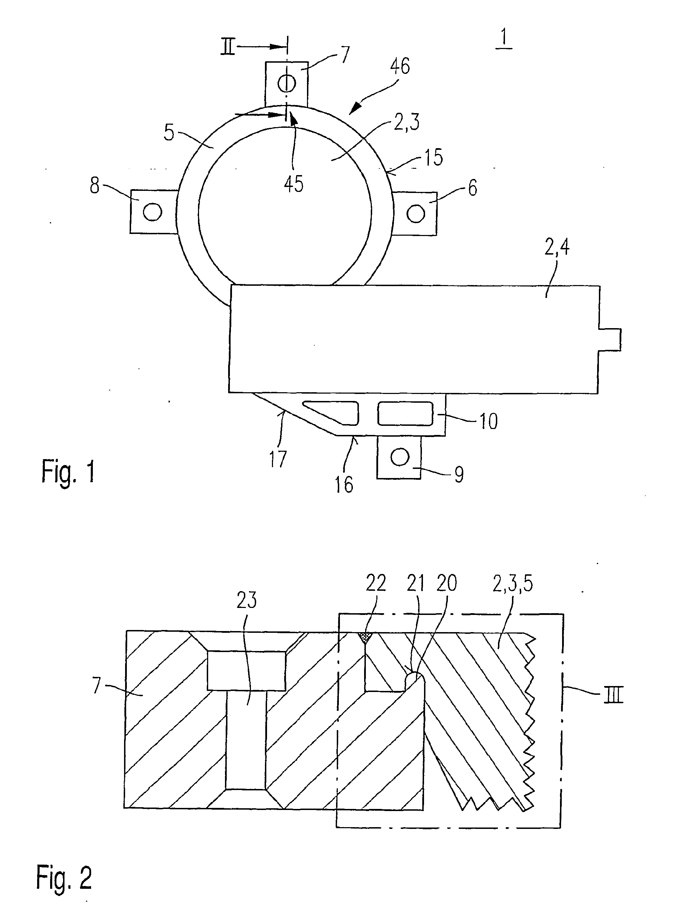

Fig. 1 zeigt ein erstes Ausführungsbeispiel einer Getriebe-Antriebseinheit 1 der Erfindung. Die Getriebe-Antriebseinheit 1 dient insbesondere zum Verstellen von beweglichen Teilen in einem Kraftfahrzeug, z.B. zum Verstellen eines Fensters oder eines Schiebedachs. Die erfindungsgemäße Getriebe-Antriebseinheit 1 eignet sich jedoch auch für andere Anwendungsfälle.

Die Getriebe-Antriebseinheit 1 umfasst ein Gehäuseteil 2, das sich aus einem Getriebegehäuseteil 3 und einem Antriebsgehäuseteil 4 zusammensetzt. Das Getriebegehäuseteil 3 des Gehäuseteils 2 weist einen kreisringförmigen Abschnitt 5 auf, der im Bereich des Antriebsgehäuseteils 4 des Gehäuseteils 2 unterbrochen ist. An dem Getriebegehäuseteil 3 sind Befestigungsdome 6, 7, 8 angebracht und an dem Antriebsgehäuseteil 4 ist ein Befestigungsdom 9 mittels eines Befestigungselements 10 befestigt, wobei das Befestigungselement 10 Teil des Gehäuseteils 2 ist.

Die Befestigungsdome 6, 7, 8 sind vor ihrer Befestigung an dem kreisringförmigen Abschnitt 5 des Getriebegehäuseteils 3 entlang des Umfangs 15 des kreisringförmigen Abschnitts 5 verschiebbar. Aufgrund der Verschiebbarkeit kann eine Anpassung der Position der Befestigungsdome 6, 7, 8 an ein vorgegebenes Anschraubbild erfolgen. Der Befestigungsdom 9 ist entlang der Kante 16 des Befestigungselementes 10 des Gehäuseteils 2 im unbefestigten Zustand verschiebbar. Außerdem kann der Befestigungsdom 9 auch an der Kante 17 angebracht werden. Durch die Wahl der Position des Befestigungsdoms 9 an der Kante 16 oder der Kante 17 kann eine Anpassung an das vorgegebene Anschraubbild erfolgen.

Die Befestigung des Befestigungsdoms 7 an dem kreisringförmigen Abschnitt 5 des Gehäuseteils 2 wird anhand der Fig. 2 nachfolgend im Detail erläutert. Die Befestigung der Befestigungsdome 6, 8 an dem kreisringförmigen Abschnitt 5 bzw. des Befestigungsdoms 9 an dem Befestigungselement 10 erfolgt entsprechend. Je nach dem vorgegebenen Anschraubbild kann auch eine kleinere oder größere Anzahl an Befestigungsdomen vorgesehen sein.

Die Fig. 2 zeigt einen auszugsweisen Schnitt entlang der in Fig. 1 mit II bezeichneten Schnittlinie. Sich entsprechende Elemente sind in dieser und in allen anderen Figuren mit übereinstimmenden Bezugszeichen versehen, wodurch sich eine wiederholende Beschreibung erübrigt.

Der Befestigungsdom 7 weist einen Vorsprung 20 auf, der in eine an dem kreisringförmigen Abschnitt 5 des Gehäuseteils 2 ausgebildete Nut 21 eingreift. Die Nut 21 ist dabei umfänglich an dem kreisringförmigen Abschnitt 5 ausgebildet. Somit kann der Befestigungsdom 7 vor seiner Befestigung umfänglich an dem kreisringförmigen Abschnitt 5 verschoben werden, um die Position einzurichten, die dem vorgegebenen Anschraubbild entspricht. In der gewünschten Position erfolgt eine zusätzliche Verbindung des Befestigungsdoms 7 mit dem kreisringförmigen Abschnitt 5 des Gehäuseteils 2 der Getriebe-Antriebseinheit 1 durch eine mittels einer Schweißnaht 22 ausgebildete Schweißverbindung. Die Verbindung des Befestigungsdoms 7 und des Gehäuseteils 2 ergibt sich daher durch eine Kombination der Verbindung, die durch das Eingreifen des Vorsprungs 20 in die Nut 21 gegeben ist, und der Verbindung, die durch die Schweißnaht 22 gegeben ist.

Alternativ können der Vorsprung 20 und die Nut 21 auch so ausgebildet sein, dass der Befestigungsdom 7 beim Anbringen an das Gehäuseteil 2 in den kreisringförmigen Abschnitt 5 einrastet, wodurch eine sichere Verbindung gegeben ist. Die zusätzliche Schweißnaht 22 kann in diesem Fall entfallen.

Der Befestigungsdom 7 weist außerdem eine Stufenbohrung 23 auf. Die Stufenbohrung 23 ist zum Befestigen des Befestigungsdoms 7 mittels einer Schraube an einer Struktur vorgesehen. Bei der Struktur kann es sich z.B. um ein Karosserieteil oder ein Teil einer Sitzkonstruktion handeln.

Durch die Verschraubung der entsprechend an dem Gehäuseteil 2 befestigten Befestigungsdome 6, 8, 9 und dem eben im Detail beschriebenen Befestigungsdom 7 an der Struktur ist eine Befestigung der Getriebe-Antriebseinheit 1 gegeben.

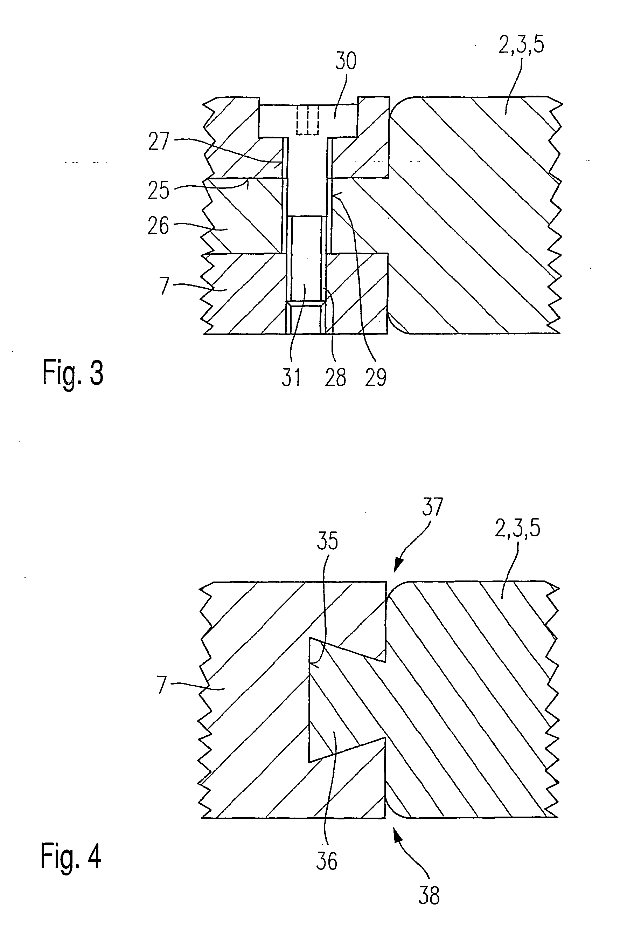

Fig. 3 zeigt den in Fig. 2 mit III bezeichneten Ausschnitt der erfindungsgemäßen Getriebe-Antriebseinheit gemäß einem zweiten Ausführungsbeispiel der Erfindung. Bei diesem Ausführungsbeispiel ist der Befestigungsdom 7 mittels einer Schraubverbindung mit dem kreisringförmigen Abschnitt 5 des Getriebegehäuseteils 3 des Gehäuseteils 2 der Getriebe-Antriebseinheit 1 verbunden. Hierzu ist in dem Befestigungsdom 7 eine Aussparung 25 vorgesehen, in die ein Vorsprung 26 des kreisringförmigen Abschnitts 5 des Gehäuseteils 2 einbringbar ist. Der Befestigungsdom 7 weist außerdem eine Bohrung 27 und eine Gewindebohrung 28 auf. Ferner weist der Vorsprung 26 des Gehäuseteils 2 eine Bohrung 29 auf. Durch die Bohrung 27 in dem Befestigungsdom 7 und die Bohrung 29 in dem Vorsprung 26 ist eine Schraube 30 mit ihrem Gewindeabschnitt 31 in die Gewindebohrung 28 einschraubbar. Im eingeschraubten Zustand wird ein Herausziehen des Vorsprungs 26 des Gehäuseteils 2 aus der Aussparung 25 des Befestigungsdoms 7 verhindert. Auf diese Weise ist zwischen dem Befestigungsdom 7 und dem Getriebegehäuseteil 3 des Gehäuseteils 2 eine lösbare Verbindung geschaffen.

Alternativ kann auch eine der Aussparung 25 entsprechende Aussparung in dem kreisringförmigen Abschnitt 5 des Gehäuseteils 2 ausgebildet sein und an dem Befestigungsdom 7 ein Vorsprung, der dem Vorsprung 26 entspricht, ausgebildet sein, um den Befestigungsdom 7 an dem kreisringförmigen Abschnitt 5 zu befestigen. In diesem Fall wird die Schraube 30 in den kreisringförmigen Abschnitt 5 eingeschraubt.

Fig. 4 zeigt den in Fig. 2 mit III bezeichneten Ausschnitt gemäß einem dritten Ausführungsbeispiel der Erfindung. In diesem Ausführungsbeispiel ist der Befestigungsdom 7 mit dem kreisringförmigen Abschnitt.5-des Getriebegehäuseteils 3 des Gehäuseteils 2 mittels einer Schwalbenschwanzverbindung verbunden. Hierfür ist in dem Befestigungsdom 7 eine schwalbenschwanzförmige Nut 35 vorgesehen und der kreisringförmige Abschnitt 5 weist einen in die Nut 35 einbringbaren schwalbenschwanzförmigen Vorsprung 36 auf. Um das Aufbringen des Befestigungsdoms 7 auf den Vorsprung 36 des kreisringförmigen Abschnitts 5 zu ermöglichen, ist der Vorsprung 36 umfänglich unterbrochen ausgebildet. Die in der Fig. 4 dargestellte Schwalbenschwanzverbindung kann auch mit der in Fig. 2 dargestellten Schweißverbindung kombiniert werden, indem vorzugsweise im Bereich 37 und/oder im Bereich 38 eine zusätzliche Schweißnaht vorgesehen wird.

Alternativ zu der in Fig. 4 dargestellten Schwalbenschwanzverbindung kann auch an dem kreisringförmigen Abschnitt 5 des Gehäuseteils 2 eine der Nut 35 entsprechende schwalbenschwanzförmige Nut ausgebildet sein, wobei dann an dem Befestigungsdom 7 ein Vorsprung vorzusehen ist, der dem Vorsprung 36 entspricht. In diesem Fall ist es vorteilhaft, dass zum Erleichtern des Einbringens des Befestigungsdoms 7 in die Nut des kreisringförmigen Abschnitts 5 die Nut zumindest an einem Abschnitt nicht schwalbenschwanzförmig sondern geöffnet ausgebildet ist. Der Befestigungsdom 7 kann dann in umfänglicher Richtung in die gewünschte Position verschoben werden.

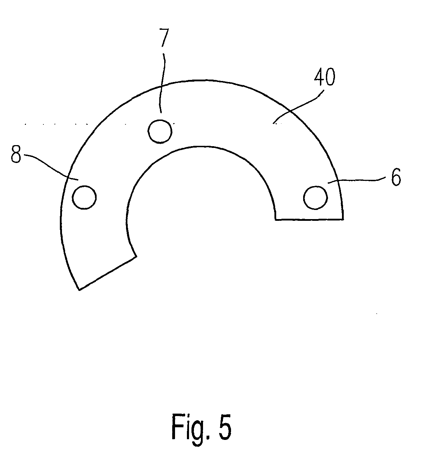

Fig. 5 zeigt Befestigungsdome 6, 7, 8, die einen gemeinsamen Grundkörper 40 aufweisen, gemäß einem vierten Ausführungsbeispiel der Erfindung. Der gemeinsame Grundkörper 40 dient zum Befestigen der Befestigungsdome 6, 7, 8 an einen kreisringförmigen Abschnitt 5 eines Gehäuseteils 2, wie es z.B. in der Fig. 1 dargestellt ist. Durch den gemeinsamen Grundkörper 40 wird der Zusammenbau der Getriebe-Antriebseinheit 1 erleichtert, da die Position der Befestigungsdome 6, 7, 8 zueinander fest vorgegeben ist und diese gemeinsam mit dem Gehäuseteil 2 verbunden werden können, so dass in einem Montageschritt eine Befestigung der drei Befestigungsdome 6, 7, 8 erreicht wird. Die Befestigung der Befestigungsdome 6, 7, 8 mittels des gemeinsamen Grundkörpers 40 an dem kreisringförmigen Abschnitt 5 des Gehäuseteils 2 kann beispielsweise auf eine Art erreicht werden, wie sie anhand der Figuren 2 bis 4 oben beschrieben worden ist.

Die in den Figuren 2 bis 4 dargestellten Verbindungen des Befestigungsdoms 7 erfolgen an einer ersten Verbindungsstelle 45, die in der Fig. 1 dargestellt ist. Der kreisringförmige Abschnitt 5 ist derart ausgebildet, dass eine Befestigung auch an einer zweiten Verbindungsstelle 46 erfolgen kann. Somit besteht vor der Befestigung des Befestigungsdomes 7 die Wahl, ob der Befestigungsdom 7 an der ersten Verbindungsstelle 45 oder an der zweiten Verbindungsstelle 46 angebracht wird. Durch diese Wahl wird eine Anpassung an unterschiedliche Anschraubbilder ermöglicht. Bei einer Befestigung des Befestigungsdoms 7 an dem kreisringförmigen Abschnitt 5, die eine kontinuierliche Verschiebung ermöglicht, kann eine Anpassung an eine Vielzahl von Anschraubbildern erfolgen. Entsprechend dem beschriebenen Befestigen des Befestigungsdoms 7 an dem kreisringförmigen Abschnitt 5 können auch die Befestigungsdome 6, 8 an unterschiedlichen Verbindungsstellen mit dem kreisringförmigen Abschnitt 5 verbunden werden. Insbesondere ist es vorteilhaft, dass die Befestigungsdome 6, 7, 8, 9 gleichartig ausgebildet sind, so dass der Befestigungsdom 6 beispielsweise alternativ an der zweiten Verbindungsstelle 46, die auch für den Befestigungsdom 7 geeignet ist, angebracht werden kann.

Die Erfindung ist nicht auf die beschriebenen Ausführungsbeispiele beschränkt. Insbesondere kann anstelle der Stufenbohrung 23 auch ein anderes Mittel vorgesehen sein, um die Befestigungsdome 6, 7, 8, 9 an einer Struktur, z.B. der Karosserie eines Kraftfahrzeugs, zu befestigen. Beispielsweise können die Befestigungsdome 6, 7, 8, 9 auch durch eine Steckverbindung an der Struktur befestigt werden. Der in der Anmeldung verwendete Begriff "Anschraubbild" ist deshalb im Hinblick auf die Befestigung der Getriebe-Antriebseinheit 1 mittels der Befestigungsdome 6, 7, 8, 9 nicht in der Weise einschränkend zu verstehen, dass lediglich eine Befestigung mittels Schraubverbindungen möglich ist, insbesondere sind auch Steckverbindungen möglich.

## Patentansprüche

1. Getriebe-Antriebseinheit (1), insbesondere zum Verstellen von beweglichen Teilen in einem Kraftfahrzeug, mit zumindest einem Gehäuseteil (2) und zumindest einem Befestigungsdom (6, 7, 8, 9), der zum Befestigen der Getriebe-Antriebseinheit (1) dient, wobei das Gehäuseteil (2) eine erste Verbindungsstelle (45) und zumindest eine weitere zweite Verbindungsstelle (46) aufweist, an denen der Befestigungsdom (6, 7, 8, 9) anbringbar ist, und der Befestigungsdom (6, 7, 8, 9) in Abhängigkeit eines in Bezug auf die Befestigung der Getriebe-Antriebseinheit (1) gegebenen Anschraubbildes entweder an der ersten Verbindungsstelle (45) oder an der zweiten Verbindungsstelle (46) mit dem Gehäuseteil (2) verbunden ist,
**dadurch gekennzeichnet,**
**dass** der Befestigungsdom (6, 7, 8, 9) einen Vorsprung (20) aufweist, der in eine an dem Gehäuseteil (2) der Getriebe-Antriebseinheit (1) ausgebildete Nut (21) eingreift, um die Verbindung zwischen dem Befestigungsdom (6, 7, 8, 9) und dem Gehäuseteil (2) zu schaffen.

2. Getriebe-Antriebseinheit nach Anspruch 1,
**dadurch gekennzeichnet,**
**dass** der Befestigungsdom (6, 7, 8, 9) mittels einer Schwalbenschwanzverbindung mit dem Gehäuseteil (2) der Getriebe-Antriebseinheit (1) verbunden ist.

3. Getriebe-Antriebseinheit nach einem der Ansprüche 1 bis 2,
**dadurch gekennzeichnet,**
**dass** der Befestigungsdom (6, 7, 8, 9) mittels einer Schweißverbindung (22) mit dem Gehäuseteil (2) der Getriebe-Antriebseinheit (1) verbunden ist.

4. Getriebe-Antriebseinheit nach Anspruch 1,
**dadurch gekennzeichnet,**
**dass** der Befestigungsdom (6, 7, 8, 9) mittels einer Schraubverbindung mit dem Gehäuseteil (2) der Getriebe-Antriebseinheit (1) verbunden ist.

5. Getriebe-Antriebseinheit nach einem der Ansprüche 1 bis 4,
**dadurch gekennzeichnet,**
**dass** die Getriebe-Antriebseinheit (1) mehrere gleichartige Befestigungsdome (6, 7, 8, 9) umfasst,
**dass** an dem Gehäuseteil der Getriebe-Antriebseinheit (1) eine Vielzahl von Verbindungsstellen (45, 46) vorgesehen ist, an denen die Befestigungsdome (6, 7, 8, 9) anbringbar sind,
**dass** die Befestigungsdome (6, 7, 8, 9) an ausgewählten Verbindungsstellen (45, 46) mit dem Gehäuseteil (2) verbunden sind, wobei die ausgewählten Verbindungsstellen (45, 46) in Abhängigkeit von dem in Bezug auf die Befestigung der Getriebe-Antriebseinheit (1) gegebenen Anschraubbild ausgewählt sind.

6. Getriebe-Antriebseinheit nach Anspruch 1,
**dadurch gekennzeichnet,**
**dass** zumindest ein weiterer Befestigungsdom (6, 7, 8) vorgesehen ist und
**dass** der Befestigungsdom (6, 7, 8) und der weitere Befestigungsdom (6, 7, 8) einen gemeinsamen Grundkörper (40) aufweisen, so dass diese gemeinsam mit dem Gehäuseteil (2) verbindbar sind.

7. Getriebe-Antriebseinheit nach Anspruch 6,
**dadurch gekennzeichnet,**
**dass** das Gehäuseteil (2) zumindest abschnittsweise einen kreisringförmigen Abschnitt (5) aufweist,
**dass** der gemeinsame Grundkörper (40) des Befestigungsdoms (6, 7, .8) und des weiteren Befestigungsdoms (6, 7, 8) den kreisringförmigen Abschnitt (5) teilweise umschließt und an der ersten (45) und der zweiten Verbindungsstelle (46) mit dem kreisringförmigen Abschnitt (5) verbindbar ist.

## Claims

1. Gearbox drive unit (1), in particular for adjusting movable parts in a motor vehicle, comprising at least one housing part (2) and at least one fixing dome (6, 7, 8, 9) which is used to fix the gearbox drive unit (1), the housing part (2) comprising a first connection point (45) and at least one further second connection point (46), on which the fixing dome (6, 7, 8, 9) may be placed, and the fixing dome (6, 7, 8, 9) being connected to the housing part (2), either at the first connection point (45) or at the second connection point (46), according to a screw layout provided relative to fixing the gearbox drive unit (1), **characterized in that** the fixing dome (6, 7, 8, 9) comprises a projection (20) which engages in a groove (21) configured on the housing part (2) of the gearbox drive unit (1), in order to create the connection between the fixing dome (6, 7, 8, 9) and the housing part (2).

2. Gearbox drive unit according to Claim 1, **characterized in that** the fixing dome (6, 7, 8, 9) is connected to the housing part (2) of the gearbox drive unit (1) by means of a dovetail connection.

3. Gearbox drive unit according to one of Claims 1 to 2, **characterized in that** the fixing dome (6, 7, 8, 9) is connected to the housing part (2) of the gearbox drive unit (1) by means of a welded connection (22).

4. Gearbox drive unit according to Claim 1, **characterized in that** the fixing dome (6, 7, 8, 9) is connected to the housing part (2) of the gearbox drive unit (1) by means of a screw connection.

5. Gearbox drive unit according to one of Claims 1 to 4, **characterized in that** the gearbox drive unit (1) comprises a plurality of fixing domes (6, 7, 8, 9) of the same type, that a plurality of connection points (45, 46) are provided on the housing part of the gearbox drive unit (1), on which the fixing domes (6, 7, 8, 9) may be placed, that the fixing domes (6, 7, 8, 9) are connected to the housing part (2) at selected connection points (45, 46), the selected connection points (45, 46) being selected according to the screw layout provided relative to the fixing of the gearbox drive unit (1).

6. Gearbox drive unit according to Claim 1, **characterized in that** at least one further fixing dome (6, 7, 8) is provided, and the fixing dome (6, 7, 8) and the further fixing dome (6, 7, 8) comprise a common base body (40) so that said fixing domes may be connected jointly to the housing part (2).

7. Gearbox drive unit according to Claim 6, **characterized in that** the housing part (2) comprises at least partially an annular portion (5), that the common base body (40) of the fixing dome (6, 7, 8) and the further fixing dome (6, 7, 8) partially surrounds the annular portion (5) and may be connected at the first (45) and the second connection point (46) to the annular portion (5).

## Revendications

1. Unité de transmission et d'entraînement (1), notamment pour déplacer des parties mobiles dans un véhicule automobile, comportant au moins une partie de boîtier (2) et au moins un dôme de fixation (6, 7, 8, 9) qui sert à fixer l'unité de transmission et d'entraînement (1), la partie de boîtier (2) présentant un premier point de liaison (45) et au moins un deuxième point de liaison (46) sur lesquels peut être amené le dôme de fixation (6, 7, 8, 9) et celui-ci, en fonction d'une image de vissage concernant la fixation de l'unité de transmission et d'entraînement, est relié à la partie de boîtier (2) au premier point de liaison (45) ou au second point de liaison (46),
**caractérisée en ce que**
le dôme de fixation (6, 7, 8, 9) présente une saillie (20) qui pénètre dans une rainure (21) creusée dans la partie de boîtier (2) de l'unité de transmission et d'entraînement (1), de manière à réaliser une liaison entre le dôme de fixation (6, 7, 8, 9) et la partie de boîtier (2).

2. Unité de transmission et d'entraînement selon la revendication 1,
**caractérisée en ce que**
le dôme de fixation (6, 7, 8, 9) est relié à la partie de boîtier (2) de l'unité de transmission et d'entraînement (1) par une liaison à queue d'aronde.

3. Unité de transmission et d'entraînement selon la revendication 1 ou 2,
**caractérisée en ce que**
le dôme de fixation (6, 7, 8, 9) est relié à la partie de boîtier (2) de l'unité de transmission et d'entraînement (1) par une liaison soudée.

4. Unité de transmission et d'entraînement selon la revendication 1,
**caractérisée en ce que**
le dôme de fixation (6, 7, 8, 9) est relié à la partie de boîtier (2) de l'unité de transmission et d'entraînement (1) par une liaison à vis.

5. Unité de transmission et d'entraînement selon une des revendications 1 à 4,
**caractérisée en ce que**
- l'unité de transmission et d'entraînement (1) comprend plusieurs dômes de fixation (6, 7, 8, 9) du même genre,
- sur la partie de boîtier de l'unité de transmission et d'entraînement (1) sont prévus une pluralité de points de liaison (45, 46) sur lesquels peuvent être amenés les dômes de fixation (6, 7, 8, 9), et
- les dômes de fixation (6, 7, 8, 9) sont reliés à la partie de boîtier (2) en des points de liaison (45, 46) choisis en fonction de l'image de vissage donnée, concernant la fixation de l'unité de transmission et d'entraînement (1).

6. Unité de transmission et d'entraînement selon la revendication 1,
**caractérisée en ce qu'**
- il est prévu au moins un autre dôme de fixation (6, 7, 8, 9), et
- le dôme de fixation (6, 7, 8, 9) et l'autre dôme de fixation (6, 7, 8, 9) présentent un corps de base (40) commun, de sorte qu'ils peuvent être reliés ensemble à la partie de boîtier (2).

7. Unité de transmission et d'entraînement selon la revendication 6,
**caractérisée en ce que**
- la partie de boîtier (2) présente au moins localement une partie (5) en forme d'anneau circulaire, et
- le corps de base (40) commun au dôme de fixation (6, 7, 8, 9) et à l'autre dôme de fixation (6, 7, 8, 9) entoure partiellement la partie (5) en forme d'anneau circulaire et peut être relié à cette partie (5) au premier point de liaison (45) et au second point de liaison (46).
